(19) Europäisches Patentamt
European Patent Office
Office européen des brevets

(11) **EP 4 682 007 A1**

(12) **EUROPEAN PATENT APPLICATION**

(43) Date of publication:
**21.01.2026 Bulletin 2026/04**

(21) Application number: **25189697.3**

(22) Date of filing: **15.07.2025**

(51) International Patent Classification (IPC):
**B60W 30/16** (2020.01)    **B60W 30/17** (2020.01)
**B60W 30/18** (2012.01)

(52) Cooperative Patent Classification (CPC):
**B60W 30/16; B60W 30/17; B60W 30/18018;**
B60W 2520/04; B60W 2520/10; B60W 2554/802;
B60W 2754/30

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **18.07.2024 JP 2024115010**

(71) Applicant: **TOYOTA JIDOSHA KABUSHIKI
KAISHA**
**Toyota-shi**
**Aichi 471-8571 (JP)**

(72) Inventor: **AKIMOTO, Hikaru**
**TOYOTA-SHI, AICHI, 471-8571 (JP)**

(74) Representative: **Cabinet Beau de Loménie**
**103, rue de Grenelle / CS 90800**
**75340 Paris Cedex 07 (FR)**

(54) **INTER-VEHICULAR DISTANCE CONTROL APPARATUS, INTER-VEHICULAR DISTANCE CONTROL METHOD, AND NON-TRANSITORY STORAGE MEDIUM STORING PROGRAM THEREOF**

(57)     A driving assistance ECU controls a host vehicle in such a manner that an inter-vehicular distance between the host vehicle and its preceding vehicle is maintained at a target inter-vehicular distance. The ECU obtains, as an another vehicle inter-vehicular distance under a stopped state, an inter-vehicular distance (1) between a first another vehicle that is in a stopped state around the host vehicle and a second another vehicle that is in a stopped state immediately in front of the first another vehicle and/or (2) between the first another vehicle and the host vehicle that is in a stopped state immediately in front of the first another vehicle. The ECU uses a preferable inter-vehicular distance under a stopped state that is set in accordance with the obtained another vehicle inter-vehicular distance under a stopped state, as the target inter-vehicular distance of when the host vehicle is in a stopped state.

FIG.4

**Description**

TECHNICAL FIELD

The present disclosure relates to an inter-vehicular distance control apparatus configured to control an inter-vehicular distance between a host vehicle and a preceding vehicle that is present immediately in front of the host vehicle, an inter-vehicular distance control method for controlling the inter-vehicular distance, and a non-transitory storage medium storing program thereof.

BACKGROUND

There has been a known apparatus configured to perform an inter-vehicular distance control to maintain an inter-vehicular distance between a host vehicle and a preceding vehicle that is present immediately in front of the host vehicle (hereinafter, this inter-vehicular distance may sometimes be referred to as a "host vehicle inter-vehicular distance") at a predetermined target inter-vehicular distance. One of such apparatuses (hereinafter, referred to as a "conventional apparatus") obtains an inter-vehicular distance between a first another vehicle that is present around the host vehicle and "a second another vehicle or the host vehicle" that is present immediately in front of the first another vehicle. This inter-vehicular distance may sometimes be referred to as an "another vehicle inter-vehicular distance".

In addition, the conventional apparatus varies, based on the obtained another vehicle inter-vehicular distance, a target inter-vehicular distance corresponding to a "host vehicle speed of when the another vehicle inter-vehicular distance is obtained" (refer to Japanese Patent Application Laid-Open No. 2008-189055).

However, the conventional apparatus sets the target inter-vehicular distance for a case where the host vehicle is in a stopped state (i.e., a case where the host vehicle speed is zero) based on the another vehicle inter-vehicular distance between the first another vehicle that is running/moving (i.e., the first another vehicle whose vehicle speed in not zero) and the second another vehicle that is running/moving immediately in front of the first another vehicle. Accordingly, the host vehicle inter-vehicular distance for the case where the host vehicle is in the stopped state, set by the conventional apparatus, is likely to greatly differ from an appropriate distance.

SUMMARY

The present disclosure is made to cope with the above-described problem. Namely, one of objects of the present disclosure is to provide an inter-vehicular distance control apparatus, a vehicle traveling control method, and a non-transitory storage medium storing a program thereof, that are capable of setting the host vehicle inter-vehicular distance for the case where the host vehicle is in the stopped state at/to a more appropriate distance.

One of embodiments of the inter-vehicular distance control apparatus according to present disclosure comprises:

> an information obtaining device (21, 22, 23L, 23R, 24L, 24R, 25, 26, 27L, 27R, 28L, and 28R) configured to obtain information on an object present around a host vehicle; and
> a controller (10, 40, and 50) configured to be capable of executing an inter-vehicular distance control to obtain, based on the information, a host vehicle inter-vehicular distance which is an inter-vehicular distance between a preceding vehicle present immediately in front of the host vehicle and the host vehicle (step 570), and to control the host vehicle in such a manner that the obtained host vehicle inter-vehicular distance is maintained at a predetermined target inter-vehicular distance (step 580, step 590).

The controller is further configured to:

> obtain, based on the information, an inter-vehicular distance between a first another vehicle that is in a stopped state around the host vehicle and a second another vehicle that is in a stopped state immediately in front of the first another vehicle or (an inter-vehicular distance) between the first another vehicle and the host vehicle that is in a stopped state immediately in front of the first another vehicle, as an another vehicle inter-vehicular distance under a stopped state (step 950); and
> use a preferable inter-vehicular distance under a stopped state that is set in accordance with the obtained another vehicle inter-vehicular distance under a stopped state, as the target inter-vehicular distance of when the host vehicle is in a stopped state (step 970, step 720).

According to the above configuration, at least one of:

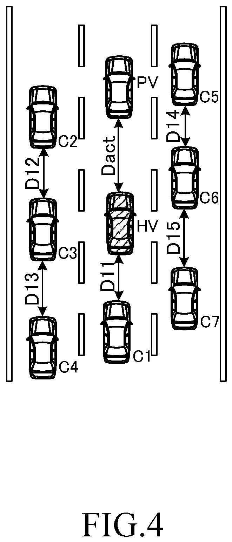

an inter-vehicular distance between the first another vehicle that is in a stopped state around the host vehicle and the second another vehicle that is in a stopped state immediately in front of the first another vehicle (refer to D12 to D15 shown in FIG. 4); and

an inter-vehicular distance between the first another vehicle and the host vehicle that is in a stopped state immediately in front of the first another vehicle (refer to D11 shown in FIG. 4),

is obtained, based on the "information on the object present around the host vehicle" obtained by the information obtaining device, as the another vehicle inter-vehicular distance under a stopped state.

Therefore, when at least one of the first vehicle and the second vehicle is not in a stopped state, the inter-vehicular distance between them is not obtained as the another vehicle inter-vehicular distance under a stopped state. Similarly, when at least one of the first vehicle and the host vehicle is not in a stopped state, the inter-vehicular distance between them is not obtained as the another vehicle inter-vehicular distance under a stopped state.

In addition, the preferable inter-vehicular distance under a stopped state, that is used/adopted as the target inter-vehicular distance of when the host vehicle is in a stopped state, is set in accordance with the obtained another vehicle inter-vehicular distance under a stopped state. Therefore, the target inter-vehicular distance of when the host vehicle is in a stopped state can be an appropriate target inter-vehicular distance.

Meanwhile, the inter-vehicular distance that a passenger car/vehicle keeps between the passenger car and the preceding vehicle when the passenger car is in a stopped state (i.e., fully stops) is likely to greatly differ from the inter-vehicular distance that a vehicle other than the passenger car keeps between that vehicle other than the passenger car and the preceding vehicle when that vehicle other than the passenger car is in a stopped state.

In view of the above, in one of embodiments of the above-described inter-vehicular distance control apparatus, the controller is configured to:

determine, based on the information, whether or not a vehicle type of the first another vehicle is a predetermined vehicle type (step 960); and

when it is determined that the vehicle type of the first another vehicle is the predetermined vehicle type,

let "an inter-vehicular distance between the first another vehicle whose type is determined to be the predetermined vehicle type and the second another vehicle that is in a stopped state immediately in front of the first another vehicle", and "an inter-vehicular distance between the first another vehicle whose type is determined to be the predetermined vehicle type and the host vehicle that is in a stopped state immediately in front of the first another vehicle" not affect the preferable inter-vehicular distance under a stopped state (step 970).

According to the above-described embodiment, the "another vehicle inter-vehicular distance under a stopped state of the first another vehicle whose type is the predetermined vehicle type" that is likely to be inappropriate for the inter-vehicular distance of the host vehicle of when the host vehicle is in a stopped state does not affect the preferable inter-vehicular distance under a stopped state. Therefore, the inter-vehicular distance of the host vehicle of when the host vehicle is in a stopped state can be controlled to a more appropriate distance.

In one of embodiments of the above-described inter-vehicular distance control apparatus, the controller is configured to:

return the preferable inter-vehicular distance under a stopped state to an initial value when a host vehicle speed which is a vehicle speed of the host vehicle becomes higher than a predetermined traffic congestion traveling determination vehicle speed (step 710: No, step 730);

thereafter, when the preferable inter-vehicular distance under a stopped state is set again after the the host vehicle is decelerated by the inter-vehicular distance control to fully stop and before a time point at which a predetermined standby period elapses from a time point at which the host vehicle fully stops (step 1040: Yes, step 1050, step 970, step 980), let the host vehicle move forward in such a manner that the host vehicle inter-vehicular distance becomes equal to the preferable inter-vehicular distance under a stopped state that is set again (step 1070, step 1080).

According to the above-described embodiment, when the host vehicle fully stops under under traffic congestion, and then, start traveling after getting out of the under traffic congestion (i.e., when the host vehicle speed becomes higher than the traffic congestion traveling determination vehicle speed), the preferable inter-vehicular distance under a stopped state is returned to the initial value. Thereafter, when the host vehicle fully stops under different traffic congestion, the host vehicle is caused to move forward in such a manner that the inter-vehicular distance that the host vehicle keeps when the host vehicle is in a stopped state becomes equal to the preferable inter-vehicular distance under a stopped state that is newly set in accordance with the inter-vehicular distance under a stopped state that another vehicle(s) keep(s) under that different traffic congestion. Therefore, the inter-vehicular distance that the host vehicle keeps of when the host vehicle is in a stopped state can be controlled to a more appropriate distance in accordance with the different traffic congestion whose state has changed.

In one of embodiments of the above-described inter-vehicular distance control apparatus, the controller is configured to:

obtain, based on the information, an inter-vehicular distance between a third another vehicle traveling around the host vehicle and a fourth another vehicle traveling immediately in front of the third another vehicle or an inter-vehicular distance between a third another vehicle traveling around the host vehicle and the host vehicle traveling immediately in front of the third another vehicle, as an another vehicle inter-vehicular distance under a traffic congestion traveling state, when the host vehicle speed becomes equal to or lower the traffic congestion traveling determination vehicle speed from a speed higher than the traffic congestion traveling determination vehicle speed while the inter-vehicular distance control is being executed (step 850);

store the host vehicle speed of when the another vehicle inter-vehicular distances under a traffic congestion traveling state is obtained, as a learned vehicle speed (step 880, look-up table M1 in step 720);

obtain through calculation the preferable inter-vehicular distance under a traffic congestion traveling state, based on the another vehicle inter-vehicular distances under a traffic congestion traveling state (step 870);

store the preferable inter-vehicular distance under a traffic congestion traveling state while associating the preferable inter-vehicular distance under a traffic congestion traveling state with the learned vehicle speed (step 720, look-up table M1 in step 720); and

determine the target inter-vehicular distance, based on the preferable inter-vehicular distance under a stopped state, the preferable inter-vehicular distance under a traffic congestion traveling state, the learned vehicle speed, and the host vehicle speed, when the host vehicle speed is lower than the learned vehicle speed (step 720).

According to the above-described embodiment, the "target inter-vehicular distance of when the host vehicle speed is between zero and the learned vehicle speed" can be set to an appropriate value in accordance with the inter-vehicular distance that the another vehicle(s) around the host vehicle keep(s). In addition, the target inter-vehicular distance just after the host vehicle fully stops does not change/vary greatly from the target inter-vehicular distance just before the host vehicle fully stops. Thus, the host vehicle can be decelerated smoothly to be fully stopped.

Notably, in the above description, in order to facilitate understanding of the present disclosure, the constituent elements corresponding to those of embodiments which will be described later are accompanied by parenthesized symbols and/or names which are used in the embodiments; however, the constituent elements of the disclosure are not limited to those in the embodiments defined by the symbols and/or names. The present disclosure covers a vehicle traveling control method, and a non-transitory storage medium storing a program thereof.

BRIEF DESCRIPTION OF THE DRAWINGS

FIG. 1 is a schematic diagram of an inter-vehicular distance control apparatus according to an embodiment of the present disclosure.
FIG. 2 is a drawing illustrating a shooting range of each of a plurality of cameras shown in FIG. 1.
FIG. 3 shows inter-vehicular distances kept by other vehicles that are traveling/moving.
FIG. 4 shows inter-vehicular distances kept by other vehicles that are in a stopped state (not moving).
FIG. 5 shows a routine executed by a CPU of a driving assistance ECU shown in FIG. 1.
FIG. 6 shows a sub routine executed by the CPU of the driving assistance ECU shown in FIG. 1.
FIG. 7 shows a sub routine executed by the CPU of the driving assistance ECU shown in FIG. 1.
FIG. 8 shows a routine executed by the CPU of the driving assistance ECU shown in FIG. 1.
FIG. 9 shows a routine executed by the CPU of the driving assistance ECU shown in FIG. 1.
FIG. 10 shows a routine executed by the CPU of the driving assistance ECU shown in FIG. 1.
FIG. 11 shows a routine executed by the CPU of the driving assistance ECU shown in FIG. 1.

DETAILED DESCRIPTION

An inter-vehicular distance control apparatus (hereinafter, referred to as a "present control apparatus") according to an embodiment of the present disclosure will be described with reference to the drawings.

<Configuration>

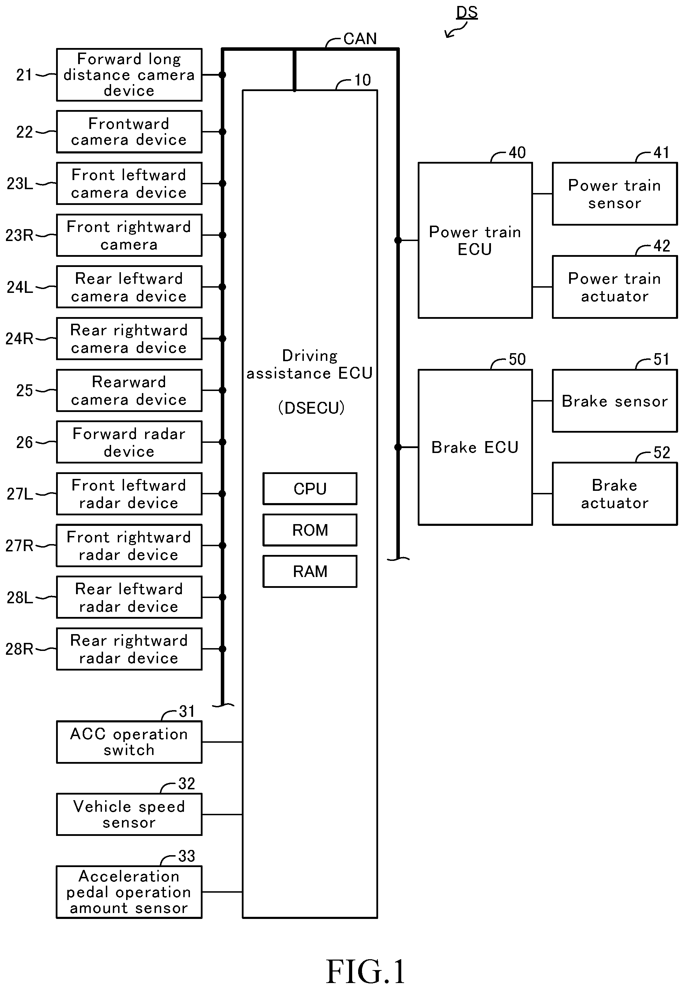

The present control apparatus DS shown in FIG. 1 is mounted on a host vehicle. The host vehicle may be any one of a vehicle having an internal combustion engine as a drive source, a vehicle having an electric motor as a drive source (i.e., an electric vehicle), a hybrid vehicle, and so forth. Namely, the drive source of the host vehicle is not limited. In the present example, the host vehicle is a vehicle (e.g., a passenger car/vehicle) whose seating capacity is equal to or less than, for example, 10 people, and that is used for mainly travelling of the people. Note that, however, the present control apparatus DS can be applied to a vehicle other than the passenger car.

The present control apparatus DS comprises a driving assistance ECU 10, a power train ECU 40, and a brake ECU 50. The driving assistance ECU 10 may sometimes be referred to as a "DSECU". These ECUs are connected to each other through Controller Area Network (CAN) (that is, a communication/sensor system CAN) in such a manner that they can exchange data with each other. An "ECU" is an abbreviation of an electronic control unit, and may sometimes be referred to as a "controller" or a "computer". The ECU is an electronic control circuit that includes a microcomputer as a main component. The microcomputer includes a CPU (a processor), a ROM, a RAM, a data writable involatile memory, and an interface. The CPU realizes various functions by executing instructions (routines) stored in the memory (i.e., the ROM).

The present control apparatus DS comprises a plurality of camera devices and a plurality of radar devices. Each of a plurality of the camera devices and each of a plurality of the radar devices are connected to the DSECU in such a manner that each of them can exchange data with the DSECU through the CAN.

A plurality of the camera devices include a forward long distance camera device 21, a frontward camera device 22, a front leftward camera device 23L, a front rightward camera device 23R, a rear leftward camera device 24L, a rear rightward camera device 24R, and a rearward camera device 25.

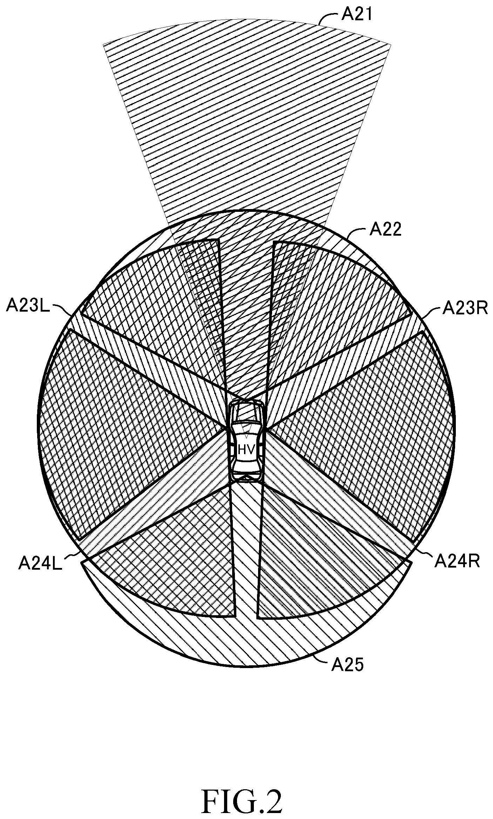

The forward long distance camera device 21 comprises a camera with a lens having a predetermined first horizontal angle of view. The forward long distance camera device 21 obtains long distance image data by taking a picture of a scene from the host vehicle to a position a first distance away in a forward direction of the host vehicle (refer to A21 shown in FIG. 2).

Each of the frontward camera device 22, the front leftward camera device 23L, the front rightward camera 23R, the rear leftward camera device 24L, the rear rightward camera device 24R, and the rearward camera device 25 comprises a camera with a wide-angle lens or a super-wide-angle lens. Each of them takes a picture of a scene of an area included in a second horizontal angle of view greater than the first horizontal angle of view.

The frontward camera device 22 obtains frontward wide angle image data by taking a picture of a scene from the host vehicle to a position a second distance away in the frontward direction of the host vehicle (refer to A22 shown in FIG. 2). The second distance is shorter than the first distance.

The front leftward camera device 23L obtains front leftward wide angle image data by taking a picture of a scene from the host vehicle to a position the second distance away in the front leftward direction of the host vehicle (refer to A23L shown in FIG. 2).

The front rightward camera device 23R obtains front rightward wide angle image data by taking a picture of a scene from the host vehicle to a position the second distance away in the front rightward direction of the host vehicle (refer to A23R shown in FIG. 2).

The rear leftward camera device 24L obtains rear leftward wide angle image data by taking a picture of a scene from the host vehicle to a position the second distance away in the rear leftward direction of the host vehicle (refer to A24L shown in FIG. 2).

The rear rightward camera device 24R obtains rear rightward wide angle image data by taking a picture of a scene from the host vehicle to a position the second distance away in the rear rightward direction of the host vehicle (refer to A24R shown in FIG. 2).

The rearward camera device 25 obtains rearward wide angle image data by taking a picture of a scene from the host vehicle to a position the second distance away in the rearward direction of the host vehicle (refer to A25 shown in FIG. 2).

As shown in FIG. 2, the ranges of scenes captured by a pair of the camera devices adjacent to each other overlap. Each of these camera devices transmits the image data obtained every time a predetermined time elapses to the DSECU. The DSECU fuses (or integrates) the image data obtained by the plurality of the camera devices including the forward long distance camera device 21. Accordingly, the DSECU obtains image data of an object that is present around the host vehicle (i.e., within a 360-degree range centered on the host vehicle) and of a road surface around the host vehicle, every time the predetermined time elapses.

Based on the obtained/fused image data, the DSECU recognizes/detects "a left demarcation line and a right demarcation line" of a host vehicle lane in which the host vehicle is present, "a left demarcation line and a right demarcation line" of a left adjacent lane that is adjacent leftward to the host vehicle lane, and "a left demarcation line and a right demarcation line" of a right adjacent lane that is adjacent rightward to the host vehicle lane. Note that a demarcation line of a lane is typically a lane demarcation line (i.e., a lane marker), and is, for example, a white line or a yellow line. Furthermore, based on the obtained/fused image data, the DSECU generates/produces camera object information. The camera object information includes information to specify "a position (a longitudinal position and a lateral position) and a type/kind" of an object that is present around the host vehicle. The type of the object includes a type of another vehicle (e.g., a passenger car, a truck, a bus, a motor bike, or the like).

As shown in FIG. 1, a plurality of the radar devices include a forward radar device 26, a front leftward radar device 27L, a front rightward radar device 27R, a rear leftward radar device 28L, and a rear rightward radar device 28R.

Each of a plurality of the radar devices is a well-known device configured to obtain information on an object present around the host vehicle, using electrical waves in a millimeter waveband. Briefly, each of the radar devices transmits millimeter waves within a predetermined detection range, and receives the millimeter waves reflected by/at the object, so as to obtain information on the object present within the detection range (this information is referred to radar information) based on information on the transmitted millimeter waves and the received millimeter waves.

The forward radar device 26 is configured to obtain radar information on an object present within a predetermined detection range in front of the host vehicle.

The front leftward radar device 27L is configured to obtain radar information on an object present within a predetermined detection range in the front-left side of the host vehicle.

The front rightward radar device 27R is configured to obtain radar information on an object present within a predetermined detection range in the front-right side of the host vehicle.

The rear leftward radar device 28L is configured to obtain radar information on an object present within a predetermined detection range in the rear-left side of the host vehicle.

The rear rightward radar device 28R is configured to obtain radar information on an object present within a predetermined detection range in the rear-right side of the host vehicle.

Each of these radar devices transmits the obtained radar information to the DSECU every time a predetermined time elapses. The DSECU obtains radar object information based on the radar information transmitted from the radar devices. The radar information includes a distance between a position at which each of the radar devices is disposed and an object, an azimuth of the object with respect to the position at which each of the radar devices is disposed, and a relative speed of the object with respect to each of the radar devices. Note that the detection range of the rear leftward radar device 28L and the detection range of the rear rightward radar device 28R have an area overlapping each other.

The DSECU fuses the radar object information that is generated based on the radar information obtained by each of a plurality of the above-described radar devices so as to generate/produce fused radar object information on the object present around the host vehicle (except an object present in the immediately lateral side of the host vehicle). The fused radar object information includes "a distance, an azimuth, and a relative speed" of an object present around the host vehicle with respect to the host vehicle.

The DSECU fuses the camera object information with the fused radar object information to generate/produce fusion object information that is final object information on an object present around the host vehicle.

Furthermore, the DSECU is connected with an ACC operation switch 31, a vehicle speed sensor 32, and an acceleration pedal operation amount sensor 33. The DSECU receives output signals from these sensors.

The ACC operation switch 31 is a switch operated by a driver of the host vehicle. An ACC means an adaptive cruise control. The ACC includes a following vehicle distant control (that is sometimes referred to as an "inter-vehicular distance control") and a constant speed control.

When a predetermined operation is made to the ACC operation switch 31 by the driver, the DSECU determines that a requirement, such as an ACC start requirement, an ACC end requirement, and an ACC resume requirement, is generated/issued in accordance with the operation. Furthermore, another operation is made to the ACC operation switch 31, the DSECU changes a target inter-vehicular time Ttgt. The target inter-vehicular time Ttgt is selected from among a first time T1 corresponding to a long target inter-vehicular distance, a second time T2 corresponding to a medium target inter-vehicular distance, and a third time T3 corresponding to a short target inter-vehicular distance.

The vehicle speed sensor 32 detects a speed of the host vehicle (i.e., host vehicle speed) Vh, and outputs a signal indicative of the host vehicle speed Vh.

The acceleration pedal operation amount sensor 33 detects an operation amount (i.e., an acceleration pedal operation amount AP) of an unillustrated acceleration pedal of the host vehicle, and outputs a signal indicative of the acceleration pedal operation amount AP.

A power train ECU 40 is connected with a power train sensor 41 and a power train actuator 42. The power train ECU 40 receives detection signals of the power train sensor 41. For example, when the drive source is the internal combustion engine, the power train sensor 41 includes an intake air amount sensor and an engine rotational speed sensor. The power train ECU 40 drives the power train actuator 42 to control an unillustrated drive device including the drive source of the host vehicle, so as to adjust a drive force of the host vehicle to control an acceleration of the host vehicle.

A brake ECU 50 is connected with a brake sensor 51 and a brake actuator 52. The brake ECU 50 receives detection signals of the brake sensor 51. The brake sensor 51 includes a brake pedal operation amount sensor and a wheel rotational speed sensor detecting a rotational speed of each wheel. The brake ECU 50 drives the brake actuator 52 to control an unillustrated brake device of the host vehicle so as to adjust a brake force applied to the host vehicle to control the acceleration (i.e., a deceleration) of the host vehicle.

(Outline of operation)

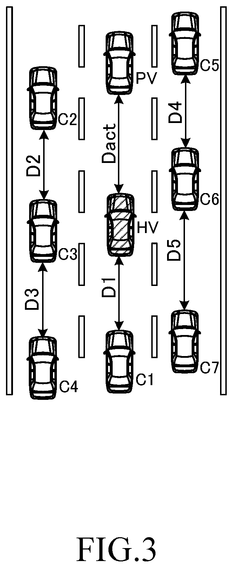

As shown in FIG. 3, when an ACC execution condition becomes satisfied, the present control apparatus DS performs the inter-vehicular distance control (i.e., the following vehicle distance control) to let the host vehicle HV follow a preceding vehicle PV that is present immediately in front of the host vehicle HV in such a manner that an actual inter-vehicular distance (i.e., the host vehicle inter-vehicular distance) Dact between the host vehicle and the preceding vehicle PV is maintained/kept at a predetermined target inter-vehicular distance Dtgt.

Under a normal traveling state (i.e., in a case where the host vehicle is traveling/moving under a condition where there is no traffic congestion), the target inter-vehicular distance Dtgt is set to a product (Vh · Ttgt) of the host vehicle speed Vh and the above-described target inter-vehicular time Ttgt that has been set by the driver of the host vehicle HV.

When the host vehicle HV is under a traffic congestion state, but the host vehicle is still moving under the traffic congestion state (i.e., when the host vehicle speed Vh is equal to or lower than a traffic congestion traveling determination vehicle speed VJth and is higher than a positive extremely low speed determination value VLth), the present control apparatus DS obtains "inter-vehicular distances D1 to D5 (refer to FIG. 3)" that will be described below, as another vehicle inter-vehicular distances under a traffic congestion traveling state, based on the camera object information or the fusion object information. Hereinafter, an "equivalent speed of the host vehicle speed Vh" means a speed that is equal to or higher than a marginal speed V1th obtained by subtracting a predetermined first speed dV1 which is positive from the host vehicle speed Vh, and is equal to or lower than a marginal speed V2th obtained by adding a predetermined second speed dV2 which is positive to the host vehicle speed Vh.

The inter-vehicular distance D1: the inter-vehicular distance D1 is an inter-vehicular distance between a rear vehicle C1 and the host vehicle HV. The rear vehicle C1 is another vehicle (a third another vehicle) that is present immediately behind the host vehicle in the host vehicle lane and is traveling at the equivalent speed of the host vehicle speed Vh. The vehicle speed of the rear vehicle C1 is higher than "0".

The inter-vehicular distance D2: the inter-vehicular distance D2 is an inter-vehicular distance between another vehicle (a third another vehicle) C3 and a different vehicle (a fourth another vehicle) C2 that is traveling immediately in front of the vehicle C3. The vehicle C3 is another vehicle that is present in the left adjacent lane and traveling in the same direction of the host vehicle HV at the equivalent speed of the host vehicle speed Vh. The vehicle speed of the vehicle C3 is higher than "0".

The inter-vehicular distance D3: the inter-vehicular distance D3 is an inter-vehicular distance between another vehicle (a third another vehicle) C4 and a different vehicle (a fourth another vehicle) C3 that is traveling immediately in front of the vehicle C4. The vehicle C4 is another vehicle that is present in the left adjacent lane and traveling in the same direction of the host vehicle HV at the equivalent speed of the host vehicle speed Vh. The vehicle speed of the vehicle C4 is higher than "0".

The inter-vehicular distance D4: the inter-vehicular distance D4 is an inter-vehicular distance between another vehicle (a third another vehicle) C6 and a different vehicle (a fourth another vehicle) C5 that is traveling immediately in front of the vehicle C6. The vehicle C6 is another vehicle that is present in the right adjacent lane and traveling in the same direction of the host vehicle HV at the equivalent speed of the host vehicle speed Vh. The vehicle speed of the vehicle C6 is higher than "0".

The inter-vehicular distance D5: the inter-vehicular distance D5 is an inter-vehicular distance between another vehicle (a third another vehicle) C7 and a different vehicle (a fourth another vehicle) C6 that is traveling immediately in front of the vehicle C7. The vehicle C7 is another vehicle that is present in the right adjacent lane and traveling in the same direction of the host vehicle HV at the equivalent speed of the host vehicle speed Vh. The vehicle speed of the vehicle C7 is higher than "0".

It should be noted that, when the vehicle (i.e., one of C1, C3, C4, C6, C7) that keeps the above-described inter-vehicular distance (one of D1 to D5) is a vehicle whose type is different from the type (in the present example, a passenger car) of the host vehicle HV (e.g., when the type of the vehicle is one of a large-size car including a truck and a bus, and a motorcycle), the present control apparatus DS regards/determines that the inter-vehicular distance that the vehicle keeps among the above-described another vehicle inter-vehicular distances D1 to D5 is not an effective "another vehicle inter-vehicular distance under a traffic congestion traveling state". For example, in the example shown in FIG. 3, if the vehicle (another vehicle) C3 is a truck, the present control apparatus DS regards/determines that the inter-vehicular distance D2 is not an effective "another vehicle inter-vehicular distance under a traffic congestion traveling state".

When one or more (preferably, two or more) of the effective "another vehicle inter-vehicular distance(s) under a traffic congestion traveling state" is/are obtained, the present control apparatus DS obtains through calculation a preferable inter-vehicular distance Dm under a traffic congestion traveling state, based on the effective "another vehicle inter-vehicular distance(s) under a traffic congestion traveling state". For example, the present control apparatus DS calculates an average of the effective "another vehicle inter-vehicular distance(s) under a traffic congestion traveling state", as the preferable inter-vehicular distance Dm under a traffic congestion traveling state. Then, the present control apparatus DS stores (learns) the thus obtained preferable inter-vehicular distance Dm under a traffic congestion traveling state, as the target inter-vehicular distance Dtgt for a learned vehicle speed Vm that is the host vehicle speed Vh of when "the effective another vehicle inter-vehicular distance(s)", that is/are used to calculate "the preferable inter-vehicular distance Dm under a traffic congestion traveling state", is/are obtained.

In addition, when the host vehicle HV is under a traffic congestion traveling state and is not moving (i.e., is in the stopped state) or is moving at an extremely low speed (i.e., when the hose vehicle speed Vh is lower than the positive extremely low speed determination value VLth), the present control apparatus DS obtains "inter-vehicular distances D11 to D15 (refer to FIG. 4)" that will be described below, as the another vehicle inter-vehicular distances under a stopped state, based on the camera object information or the fusion object information.

The inter-vehicular distance D11: the inter-vehicular distance D11 is an inter-vehicular distance between a rear vehicle C1 (a first another vehicle) and the host vehicle HV that is in the stopped state. The rear vehicle C1 is in the stopped state immediately behind the host vehicle HV in the host vehicle lane.

The inter-vehicular distance D12: the inter-vehicular distance D12 is an inter-vehicular distance between another vehicle (a first another vehicle) C3 that is in the stopped state in the left adjacent lane and a different vehicle C2 (a second another vehicle) that is in the stopped state immediately in front of the vehicle C3 in the left adjacent lane.

The inter-vehicular distance D13: the inter-vehicular distance D13 is an inter-vehicular distance between another vehicle (a first another vehicle) C4 that is in the stopped state in the left adjacent lane and a different vehicle C3 (a second another vehicle) that is in the stopped state immediately in front of the vehicle C4 in the left adjacent lane.

The inter-vehicular distance D14: the inter-vehicular distance D12 is an inter-vehicular distance between another vehicle (a first another vehicle) C6 that is in the stopped state in the right adjacent lane and a different vehicle C5 (a second another vehicle) that is in the stopped state immediately in front of the vehicle C6 in the right adjacent lane.

The inter-vehicular distance D15: the inter-vehicular distance D15 is an inter-vehicular distance between another vehicle (a first another vehicle) C7 that is in the stopped state in the right adjacent lane and a different vehicle C6 (a second another vehicle) that is in the stopped state immediately in front of this another vehicle C7 in the right adjacent lane.

In this case as well, when the vehicle (i.e., one of C1, C3, C4, C6, C7) that keeps the above-described inter-vehicular distance (one of D11 to D15) is a vehicle whose type is different from the type (in the present example, a passenger car) of the host vehicle HV, the present control apparatus DS regards/determines that the inter-vehicular distance that the vehicle keeps among the above-described another vehicle inter-vehicular distances D11 to D15 is not an effective "another vehicle inter-vehicular distance under a stopped state". For example, in the example shown in FIG. 4, if the vehicle C3 is a truck, the present control apparatus DS regards/determines that the inter-vehicular distance D12 is not an effective "another vehicle inter-vehicular distance under a stopped state".

When one or more (preferably, two or more) of the effective "another vehicle inter-vehicular distance(s) under a stopped state" is/are obtained, the present control apparatus DS obtains through calculation a preferable inter-vehicular distance D0 under a stopped state, based on the effective "another vehicle inter-vehicular distance(s) under a stopped state". For example, the present control apparatus DS calculates an average of the effective "another vehicle inter-vehicular distance(s) under a stopped state", as the preferable inter-vehicular distance D0 under a stopped state. Then, the present control apparatus DS stores (learns) the thus obtained preferable inter-vehicular distance D0 under a stopped state, as the target inter-vehicular distance Dtgt for a case where the host vehicle speed Vh is "0".

After the preferable inter-vehicular distance Dm under a traffic congestion traveling state and the preferable inter-vehicular distance D0 under a stopped state are obtained (learned), the present control apparatus DS obtains through calculation the target inter-vehicular distance Dtgt under a traffic congestion traveling state, based on the preferable inter-vehicular distance Dm under a traffic congestion traveling state, the preferable inter-vehicular distance D0 under a stopped state, the learned vehicle speed Vm, and a current host vehicle speed Vh, according to, for example, a linear interpolation method with respect to the host vehicle speed Vh.

It should be noted that, when the preferable inter-vehicular distance D0 under a stopped state has not been obtained, the present control apparatus DS sets the preferable inter-vehicular distance D0 under a stopped state to a preset initial value D0int. Therefore, when the host vehicle HV has fully stopped in a case where the preferable inter-vehicular distance Dm under a traffic congestion traveling state has been learned but the preferable inter-vehicular distance D0 under a stopped state has not been learned yet, the inter-vehicular distance between the host vehicle HV and the preceding vehicle PV becomes close to the initial value D0int of the preferable inter-vehicular distance D0 under a stopped state. In this case, if the preferable inter-vehicular distance D0 under a stopped state is learned in a period from a time point at which the host vehicle HV fully stops to a time point at which a predetermined standby time elapses from the time point at which the host vehicle HV fully stops, the present control apparatus DS lets the host vehicle HV creep drive in such a manner that the actual host vehicle inter-vehicular distance Dact becomes equal to the learned preferable inter-vehicular distance D0 under a stopped state, when the actual host vehicle inter-vehicular distance Dact is longer than the learned preferable inter-vehicular distance D0 under a stopped state.

In this manner, according to the present control apparatus DS, the actual host vehicle inter-vehicular distance Dact is adjusted based on the inter-vehicular distance(s) (i.e., the "another vehicle inter-vehicular distance(s)") that the "another vehicle(s) around the host vehicle HV" keep(s). Therefore, the possibility that the driver of the host vehicle HV has a feeling of strangeness can be reduced. In addition, according to the present control apparatus DS, the preferable inter-vehicular distance D0 under a stopped state is a distance calculated based on a distance between a first vehicle that fully stops (i.e., a vehicle that is not traveling) and a second vehicle that fully stops (i.e., a vehicle that is not traveling) immediately in front of the first vehicle. Therefore, the preferable inter-vehicular distance D0 under a stopped state (and thus, the target inter-vehicular distance) becomes a preferable/appropriate distance that should be kept by the host vehicle HV when the host vehicle HV fully stops.

(Specific operation)

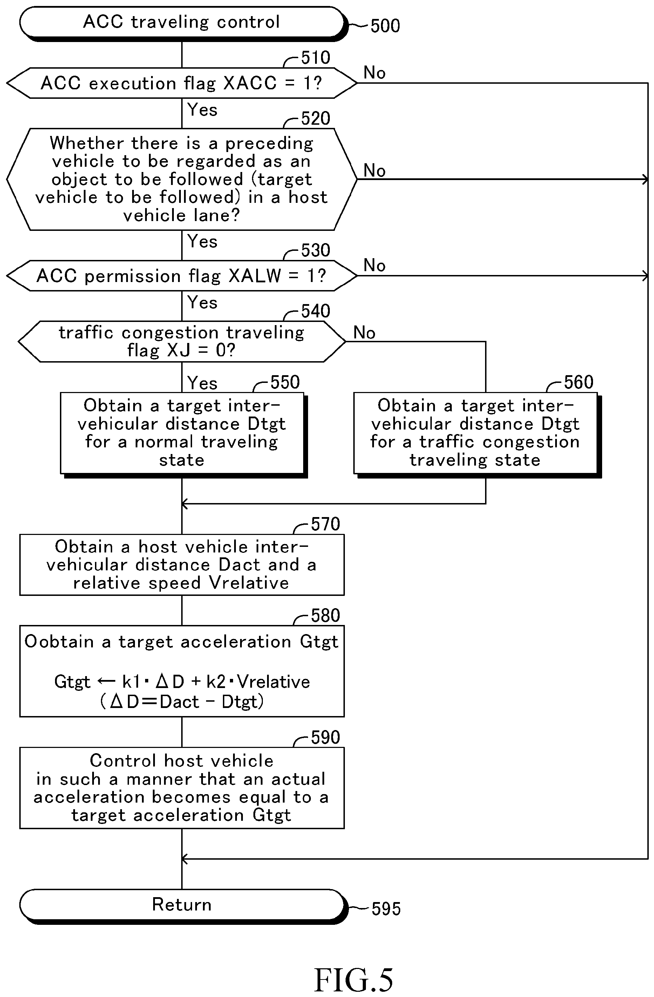

The CPU of the DSECU executes routines shown by flowcharts in FIGs. 5, and 8 to 11, every time a predetermined time elapses. Hereinafter, the CPU of the DSECU is expressed as a CPU unless otherwise noted.

1. ACC traveling control (inter-vehicular distance control)

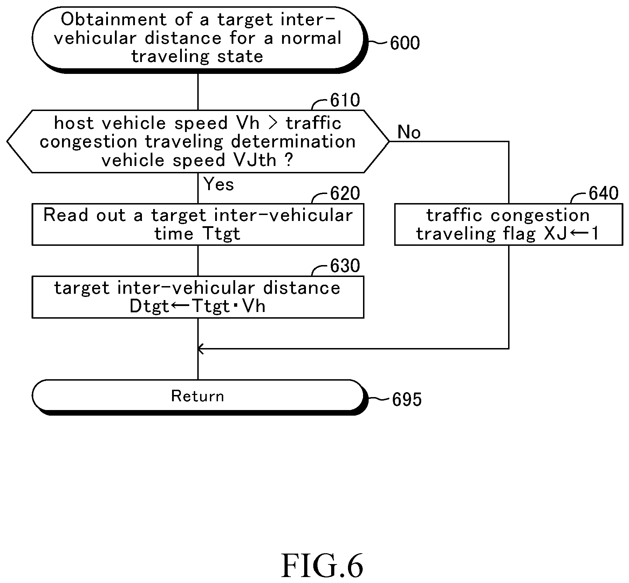

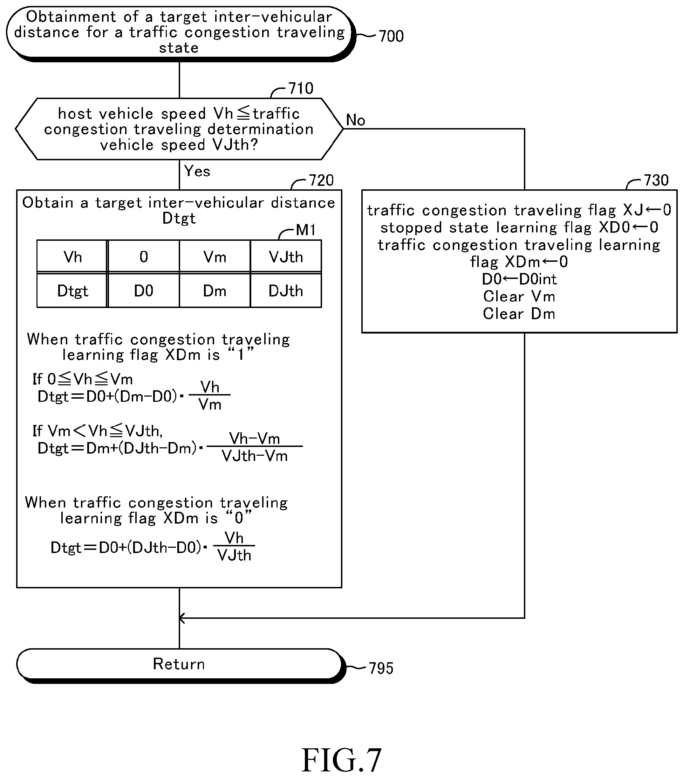

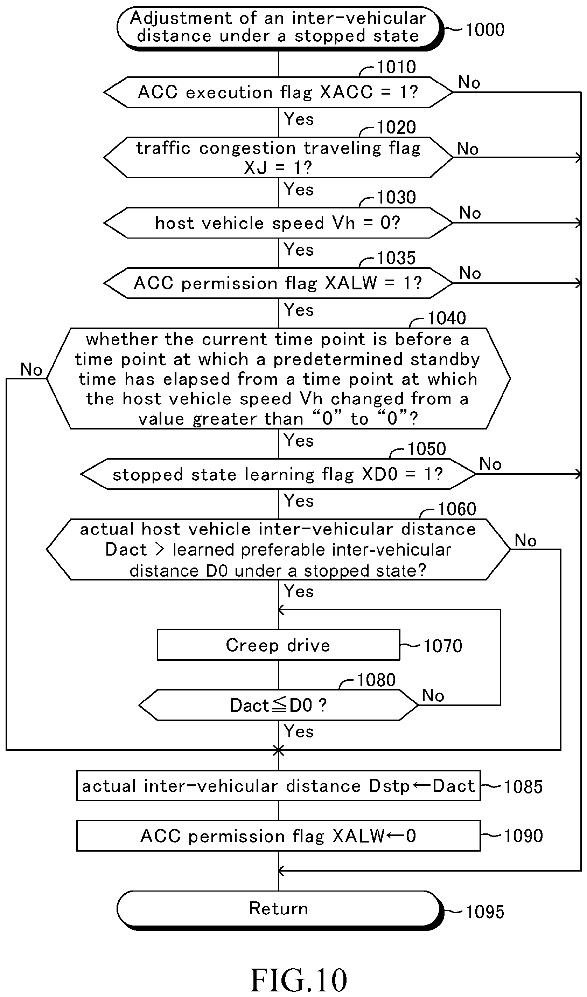

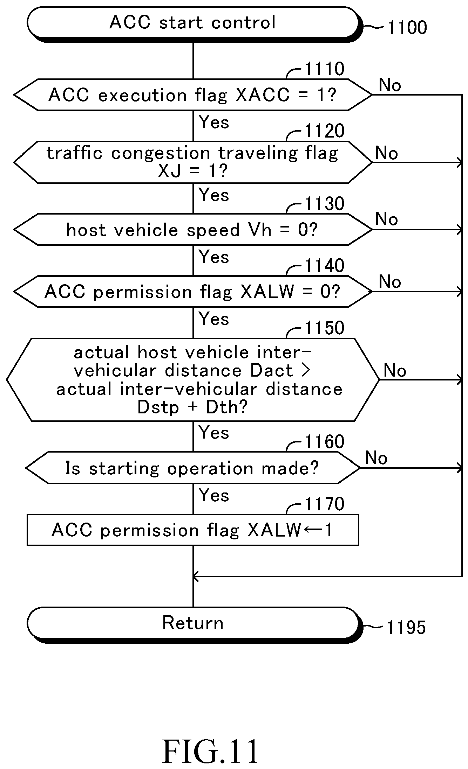

When an appropriate time point comes, the CPU starts processing from step 500 in FIG. 5, and proceeds to step 510. At step 510, the CPU determines whether or not a value of an ACC execution flag XACC is "1". The value of the ACC execution flag XACC is set to "1" through an unillustrated routine when an ACC start condition becomes satisfied, and is set to "0" through an unillustrated routine when an ACC end condition becomes satisfied. The ACC start condition becomes satisfied, for example, when the ACC start requirement is generated due to an operation to the ACC operation switch 31 while the ACC is not being executed (i.e., when the value of the ACC execution flag XACC is set at "0"), and the host vehicle speed Vh of that time is higher than the traffic congestion traveling determination vehicle speed VJth. The ACC end condition becomes satisfied, for example, when the ACC end requirement is generated due to an operation to the ACC operation switch 31 when the value of the ACC execution flag XACC is set at "1".
Note that the values of the ACC execution flag XACC is set to "0" through an unillustrated initialization routine executed by the CPU when a position of a start switch (e.g., an ignition key switch, a ready switch, or the like) of the host vehicle HV is changed from an off position to an on position.
When the value of the ACC execution flag XACC is "1", the CPU makes a "Yes" determination at step 510, and proceed to step 520. At step 520, the CPU determines whether or not there is a preceding vehicle to be regarded/treated as an object to be followed (i.e., a target vehicle to be followed) in the host vehicle lane. For example, when there is another vehicle traveling immediately in front of the host vehicle, and an inter-vehicular distance between that vehicle and the host vehicle is equal to or shorter than a predetermined inter-vehicular distance threshold, the CPU regards/treats the vehicle as the target vehicle to be followed.
When there is a target vehicle to be followed, the CPU proceeds to step 530 from step 520, and determines whether or not a value of an ACC permission flag XALW is "1". The value of the ACC permission flag XALW is set to "1" when the value of the ACC execution flag XAC is changed from "0" to "1". The value of the ACC permission flag XALW is set to "0" when a predetermined standby time elapses from a time point at which the host vehicle HV is completely stopped by the ACC (refer to step 1090 in FIG. 10, described later). In addition, the value of the ACC permission flag XALW is set to "1" when a starting operation of the host vehicle HV is made while the value of the ACC permission flag XALW is "0" (refer to step 1170 in FIG. 11, described later).
After the ACC is started, the value of the ACC permission flag XALW is typically "1". In this case, the CPU makes a "Yes" determination at step 530 and proceeds to step 540. At step 540, the CPU determines whether or not a value of a traffic congestion traveling flag XJ is "0". The value of the traffic congestion traveling flag XJ is set to "0", when the value of the above-described ACC execution flag XACC is changed from "0" to "1". In addition, the value of the traffic congestion traveling flag XJ is set to "1" when the host vehicle speed Vh becomes equal to or lower than the traffic congestion traveling determination vehicle speed VJth while the value of the ACC execution flag XACC is "1" (i.e., while the ACC is being executed) (refer to step 640 shown in FIG. 6, described later). The value of the traffic congestion traveling flag XJ is set to "0" when the host vehicle speed Vh becomes higher than the traffic congestion traveling determination vehicle speed VJth (refer to step 730 shown in FIG. 7, described later).
When the traffic congestion traveling flag XJ is "0", the CPU makes a "Yes" determination at step 540 and proceeds to step 550. At step 550, the CPU obtains through calculation a target inter-vehicular distance Dtgt for a normal traveling state by executing a sub routine shown in FIG. 6, which will be described later. Thereafter, the CPU proceeds to step 570.
Whereas, when the traffic congestion traveling flag XJ is "1", the CPU makes a "No" determination at step 540 and proceeds to step 560. At step 560, the CPU obtains through calculation a target inter-vehicular distance Dtgt for a traffic congestion traveling state by executing a sub routine shown in FIG. 7, which will be described later. Thereafter, the CPU proceeds to step 570.
At step 570, the CPU obtains (measures) the above-described host vehicle inter-vehicular distance Dact (i.e., the actual inter-vehicular distance between the host vehicle HV and the preceding vehicle PV present immediately in front of the host vehicle HV, as shown in FIG. 2) based on the fusion object information. In addition, the CPU obtains the relative speed Vrelative of the preceding vehicle PV with respect to the host vehicle HV. Note that the relative speed Vrelative assumes a positive value when the preceding vehicle PV moves away from the host vehicle HV.

Subsequently, the CPU proceeds to step 580, and obtains the target acceleration Gtgt through calculation using expressions (1) and (2) below. The target inter-vehicular distance Dtgt in the expression (1) is the target inter-vehicular distance that is obtained either at step 550 or at step 560. K1 and K2 in the expression (2) are predetermined positive gains (constants). Note that an acceleration term (K3·dVrelative/dt) may be added to the right-hand side of the expression (2).

Inter-vehicular distance deviation ΔD

= host vehicle inter-vehicular distance Dact - target inter-vehicular distance Dtgt

···(1)

$$\text{Target acceleration Gtgt} = K1 \cdot \Delta D + K2 \cdot \text{Vrelative} \quad \cdots(2)$$

Subsequently, the CPU proceeds to step 590, and controls the acceleration of the host vehicle HV in such a manner that an actual acceleration of the host vehicle HV (i.e., a change amount of the host vehicle speed Vh per unit time) becomes equal to the target acceleration Gtgt by transmitting instructions to the power train ECU 40 and the brake ECU 50. This causes the inter-vehicular distance control to be executed to accelerate or decelerate the host vehicle HV so that the host vehicle inter-vehicular distance Dact coincides with the target acceleration Gtgt. Thereafter, the CPU proceeds to step 595 to terminate the present routine tentatively.

It should be noted that, when the CPU makes a "No" determination at any one of steps from step 510 to step 530, it directly proceeds to step 595 from the step at which the CPU makes the "No" determination.

2. Obtainment of a target inter-vehicular distance for a normal traveling state

As described above, when the CPU proceeds to step 550, the CPU executes the sub routine shown in FIG. 6 to obtain the target inter-vehicular distance Dtgt for a normal traveling state. Specifically, when the CPU proceeds to step 550, the CPU starts processing from step 600 in FIG. 6, and proceeds to step 610. At step 610, the CPU determines whether or not the host vehicle speed Vh is higher than the traffic congestion traveling determination vehicle speed VJth. When the host vehicle speed Vh is higher than the traffic congestion traveling determination vehicle speed VJth, the CPU makes a "Yes" determination at step at step 610, and executes "processes of steps 620 and 630", described below, sequentially. Thereafter, the CPU proceeds to step 695 to terminate the present routine tentatively.

Step 620: the CPU reads out the above-described target inter-vehicular time Ttgt that has been set by the driver.

Step 630: the CPU sets the target inter-vehicular distance Dtgt to a product of the target inter-vehicular time Ttgt and the host vehicle speed Vh.

Whereas, when the CPU proceeds to step 610 and the host vehicle speed Vh is equal to or lower than the traffic congestion traveling determination vehicle speed VJth, the CPU makes a "No" determination at step at step 610, and executes processes of step 640. At step 640, the CPU sets the value of the traffic congestion traveling flag XJ to "1". Then, the CPU proceeds to step 695. Note that, in this case, the target inter-vehicular distance Dtgt is set to the product of the target inter-vehicular time Ttgt and the host vehicle speed Vh.

3. Obtainment of a target inter-vehicular distance for a traffic congestion traveling state

As described above, when the CPU proceeds to step 560, the CPU executes the sub routine shown in FIG. 7 to obtain the target inter-vehicular distance Dtgt for for a traffic congestion traveling state. Specifically, when the CPU proceeds to step 560, the CPU starts processing from step 700 in FIG. 7, and proceeds to step 710. At step 710, the CPU determines whether or not the host vehicle speed Vh is equal to or lower than the traffic congestion traveling determination vehicle speed VJth. When the host vehicle speed Vh is equal to or lower than the traffic congestion traveling determination vehicle speed VJth, the CPU makes a "Yes" determination at step at step 710, and proceeds to step 720.

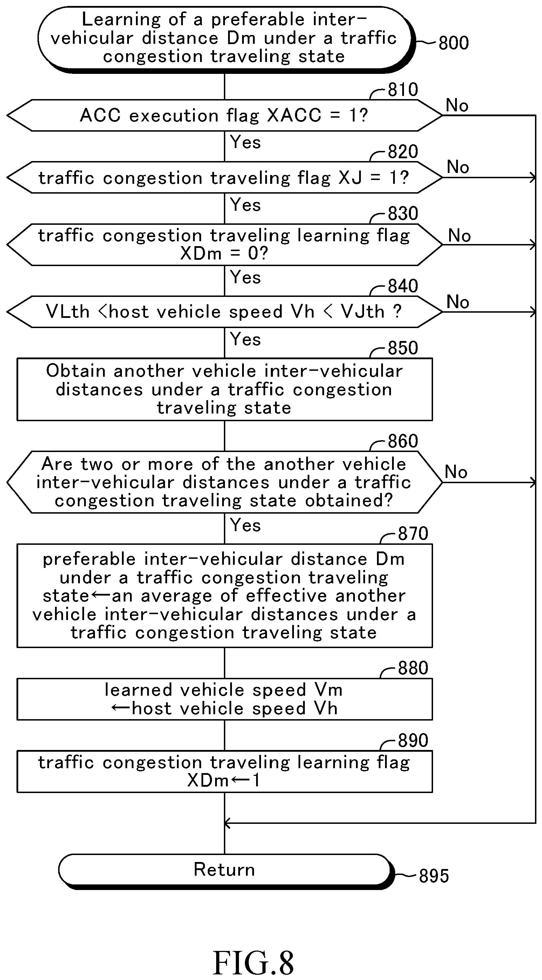

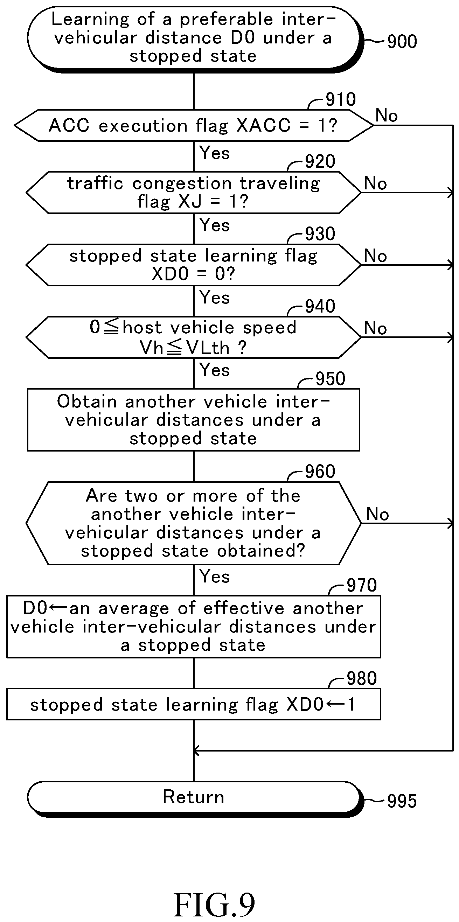

At step 720, the CPU obtains the target inter-vehicular distance Dtgt based on data stored in a look-up table M1 and the current host vehicle speed Vh. The look-up table M1 defines a relationship between the host vehicle speed Vh and the target inter-vehicular distance Dtgt. The CPU calculates the target inter-vehicular distance Dtgt using expressions (3) to (5), described below, that are according to an interpolation method. Thereafter, the CPU proceeds to step 795 to terminate the present routine tentatively. Note that, DJth is the target inter-vehicular distance Dtgt of when the host vehicle speed Vh is equal to the traffic congestion traveling determination vehicle speed VJth, and has been set in advance. Vm is the above-described learned vehicle speed Vm. Dm is the above-described preferable inter-vehicular distance Dm under a traffic congestion traveling state. These values (Vm, Dm) are obtained/learned by a routine shown in FIG. 8, described later. D0 is the above-described preferable inter-vehicular distance D0 under a stopped state and is obtained/learned by a routine shown in FIG. 9, described later.

(Case 1)

When a value of a traffic congestion traveling learning flag XDm is "1" (i.e., when the learned vehicle speed Vm and the preferable inter-vehicular distance Dm have been learned, and have not yet cleared)

$$\text{If } 0 \leqq Vh \leqq Vm$$
$$Dtgt = D0 + (Dm-D0) \cdot (Vh/Vm) \quad \cdots (3)$$

$$\text{If } Vm < Vh \leqq VJth$$
$$Dtgt = Dm + (DJth-Dm) \cdot (Vh-Vm)/(VJth-Vm) \quad \cdots (4)$$

(Case 2)

When the value of the traffic congestion traveling learning flag XDm is "0" (i.e., when the learned vehicle speed Vm and the preferable inter-vehicular distance Dm have not been learned, and have been cleared)

$$Dtgt = D0 + (DJth-D0) \cdot (Vh/VJth) \quad \cdots (5)$$

Whereas, when the host vehicle speed Vh is higher than the traffic congestion traveling determination vehicle speed VJth, the CPU makes a "No" determination at step at step 710, and proceeds to step 730. At step 730, the CPU executes the processes described below. Thereafter, the CPU proceeds to step 795 to terminate the present routine tentatively. Note that, in this case, the target inter-vehicular distance Dtgt is set to the product of the target inter-vehicular time Ttgt and the host vehicle speed Vh.
The CPU sets the value of the traffic congestion traveling flag XJ to "0".
The CPU sets a value of a stopped state learning flag XD0 to "0". The value of the stopped state learning flag XD0 is set to "1" when the above-described preferable inter-vehicular distance D0 under a stopped state is calculated (learned) (refer to step 980 shown in FIG. 9).
The CPU sets the value of the traffic congestion traveling learning flag XDm to "0".
The CPU sets the value of the preferable inter-vehicular distance D0 under a stopped state stored in the look-up table M1 to the initial value D0int.
The CPU clears each of "the learned vehicle speed Vm and the preferable inter-vehicular distance Dm under a traffic congestion traveling state" stored in the look-up table M1.

4. Learning of the preferable inter-vehicular distance Dm under a traffic congestion traveling state and the learned vehicle speed Vm

A method for learning "the preferable inter-vehicular distance Dm under a traffic congestion traveling state and the learned vehicle speed Vm" stored in the look-up table M1 (refer to step 720 shown in FIG. 7) will next be described. When an appropriate time point comes, the CPU starts processing from step 800 in FIG. 8, and proceeds to step 810. At step 810, the CPU determines whether or not the value of the ACC execution flag XACC is "1". When the value of the ACC execution flag XACC is "1", the CPU proceeds to step 820. At step 820, the CPU determines whether or not the value of the traffic congestion traveling flag XJ is "1".
When the value of the traffic congestion traveling flag XJ is "1", the CPU makes a "Yes" determination at step 820, and proceeds to step 830. At step 830, the CPU determines whether or not the value of the traffic congestion traveling learning flag XDm is "0". Namely, the CPU determines whether or not the value of the "preferable inter-vehicular distance Dm under a traffic congestion traveling state" has not been learned since the host vehicle HV was involved in a current traffic congestion (i.e., since when the host vehicle speed Vh became equal to or lower than the traffic congestion traveling determination vehicle speed VJth).
When the value of the traffic congestion traveling learning flag XDm is "0", the CPU proceeds to step 840. At step 840, the CPU determines whether or not the both of conditions described below are satisfied.

Condition 1: the vehicle speed Vh is greater than the positive extremely low speed determination value VLth (namely, the host vehicle HV does not fully stop).

Condition 2: the vehicle speed Vh is smaller than the traffic congestion traveling determination vehicle speed VJth.

When the conditions at step 840 are both satisfied, the CPU proceeds to step 850 from step 840. At step 850, the CPU obtains the distance(s) that can be obtained among the above-described another vehicle inter-vehicular distances under a traffic congestion traveling state (refer to the inter-vehicular distances D1 to D5, shown in FIG. 3), based on the camera object information or the fusion object information.

Subsequently, the CPU proceeds to step 860 and determines whether or not two or more of the obtained another vehicle inter-vehicular distances under a traffic congestion traveling state are effective. Specifically, the CPU determines whether or not the type of a "rearward another vehicle that is located behind a forward another vehicle" the "another vehicle inter-vehicular distance under a traffic congestion traveling state" away from the forward another vehicle" is a predetermined type (i.e., one of a large-size car such as a truck and a bus, and a motorcycle) that is different from the type of the host vehicle HV (i.e., a passenger car). When it is determined that the type of the rearward another vehicle is the above-described predetermined type that is different from the type of the host vehicle HV, the CPU determines that the vehicle inter-vehicular distance under a traffic congestion traveling state between the reward another vehicle and the forward another vehicle is not effective, as the another vehicle inter-vehicular distance under a traffic congestion traveling state. Furthermore, the CPU determines whether or not the type of the rearward another vehicle that is located immediately behind the host vehicle HV is the predetermined type that is different from the type of the host vehicle HV. When it is determined that the type of the rearward another vehicle is the above-described predetermined type that is different from the type of the host vehicle HV, the CPU determines that the inter-vehicular distance between the rearward another vehicle and the host vehicle HV is not effective as the another vehicle inter-vehicular distance under a traffic congestion traveling state.

When two or more of the effective another vehicle inter-vehicular distances under a traffic congestion traveling state have been obtained, the CPU learns the preferable inter-vehicular distance Dm under a traffic congestion traveling state and the learned vehicle speed Vm, by executing processes of steps from step 870 to step 890 described below. Thereafter, the CPU proceeds to step 895 to terminate the present routine tentatively.

Step 870: the CPU obtains an average of the obtained effective another vehicle inter-vehicular distances under a traffic congestion traveling state, as the preferable inter-vehicular distance Dm under a traffic congestion traveling state. Namely, the CPU stores the average in an appropriate location in the look-up table M1, as the preferable inter-vehicular distance Dm under a traffic congestion traveling state.

Step 880: the CPU stores the current host vehicle speed Vh, as the learned vehicle speed Vm, in an appropriate location in the look-up table M1.

Step 890: the CPU sets the value of the traffic congestion traveling learning flag XDm to "1".

It should be noted that, when the CPU makes a "No" determination at any one of steps from step 810 to step 840, and when the CPU makes a "No" determination at step 860, it directly proceeds to step 895 from the step at which the CPU makes the "No" determination.

5. Learning of the preferable inter-vehicular distance D0 under a stopped state

A method for learning "the preferable inter-vehicular distance D0 under a stopped state" stored in the look-up table M1 (refer to step 720 shown in FIG. 7) will next be described. When an appropriate time point comes, the CPU starts processing from step 900 in FIG. 9, and proceeds to step 910. At step 910, the CPU determines whether or not the value of the ACC execution flag XACC is "1". When the value of the ACC execution flag XACC is "1", the CPU proceeds to step 920. At step 920, the CPU determines whether or not the value of the traffic congestion traveling flag XJ is "1".

When the value of the traffic congestion traveling flag XJ is "1", the CPU makes a "Yes" determination at step 920, and proceeds to step 930. At step 930, the CPU determines whether or not the value of the stopped state learning flag XD0 is "0". Namely, the CPU determines whether or not the value of the "preferable inter-vehicular distance D0 under a stopped state" has not been learned since the host vehicle HV was involved in a current traffic congestion (i.e., since when the host vehicle speed Vh became equal to or lower than the traffic congestion traveling determination vehicle speed VJth).

When the value of the stopped state learning flag XD0 is "0", the CPU proceeds to step 940. At step 940, the CPU determines whether or not the current host vehicle speed Vh is greater than "0" and equal to or smaller than the positive extremely low speed determination value VLth. Note that, the CPU may determine whether or not the current host vehicle speed Vh is "0" at step 940.

When the determination condition at step 940 is satisfied, the CPU proceeds to step 950 from step 940. At step 950, the CPU obtains the distances that can be obtained among the above-described another vehicle inter-vehicular distances under a stopped state (refer to the inter-vehicular distances D11 to D15, shown in FIG. 4), based on the camera object information or the fusion object information.

Subsequently, the CPU proceeds to step 960 and determines whether or not two or more of the obtained another vehicle inter-vehicular distance under a stopped state are effective. Specifically, the CPU determines whether or not the type of a rearward vehicle that is in the stopped state and that is located behind a forward another vehicle the "another vehicle inter-vehicular distance under a stopped state" away from the forward another vehicle is the predetermined type (i.e., one of a large-size car such as a truck and a bus, and a motorcycle) that is different from the type of the host vehicle HV (i.e., a passenger car). When it is determined that the type of the rearward another vehicle is the above-described predetermined type that is different from the type of the host vehicle HV, the CPU determines that the another vehicle inter-vehicular distance under a stopped state is not effective. Furthermore, the CPU determines whether or not the type of the rearward another vehicle that is in the stopped state and is located immediately behind the host vehicle HV is the predetermined type that is different from the type of the host vehicle HV. When it is determined that the type of the rearward another vehicle is the above-described predetermined type that is different from the type of the host vehicle HV, the CPU determines that the inter-vehicular distance between the rearward another vehicle and the host vehicle HV is not effective as the another vehicle inter-vehicular distance under a stopped state.

When two or more of the effective another vehicle inter-vehicular distances under a stopped state have been obtained, the CPU learns the preferable inter-vehicular distance D0 under a stopped state, by executing processes of steps of step 970 and step 980 described below. Thereafter, the CPU proceeds to step 995 to terminate the present routine tentatively.

Step 970: the CPU obtains an average of the obtained effective another vehicle inter-vehicular distances under a stopped state, as the preferable inter-vehicular distance D0 under a stopped state. Namely, the CPU stores the average in an appropriate location in the look-up table M1, as the preferable inter-vehicular distance D0 under a stopped state.

Step 980: the CPU sets the value of the stopped state learning flag XD0 to "1".

It should be noted that, when the CPU makes a "No" determination at any one of steps from step 910 to step 940, and when the CPU makes a "No" determination at step 960, it directly proceeds to step 995 from the step at which the CPU makes the "No" determination.

## 6. Adjustment of the inter-vehicular distance under a stopped state

When an appropriate time point comes, the CPU starts processing from step 1000 in FIG. 10, and proceeds to step 1010. At step 1010, the CPU determines whether or not the value of the ACC execution flag XACC is "1". When the value of the ACC execution flag XACC is "1", the CPU proceeds to step 1020. At step 1020, the CPU determines whether or not the value of the traffic congestion traveling flag XJ is "1".

When the value of the traffic congestion traveling flag XJ is "1", the CPU makes a "Yes" determination at step 1020, and proceeds to step 1030. At step 1030, the CPU determines whether or not the host vehicle speed Vh is "0" (namely, whether or not the host vehicle HV fully stops and thus is in the stopped state).

When the host vehicle speed Vh is "0", the CPU makes a "Yes" determination at step 1030, and proceeds to step 1035. At step 1035, the CPU determines whether or not the value of the ACC permission flag XALW is "1". When the value of the ACC permission flag XALW is "1", the CPU makes a "Yes" determination at step 1035, and proceeds to step 1040. At step 1040, the CPU determines whether or not the current time point is before a time point at which a predetermined standby time has elapsed from a time point (i.e., the stopped time point) at which the host vehicle speed Vh changed from a value greater than "0" to "0". When the current time point is between the stopped time point and the time point at which the predetermined standby time has elapsed from the stopped time point, the CPU proceeds to step 1050 from step 1040, and determines whether or not the value of the stopped state learning flag XD0 is "1".

When the value of the stopped state learning flag XD0 is "1" (i.e., when the value of the preferable inter-vehicular distance D0 under a stopped state has been learned), the CPU makes a "Yes" determination at step 1050 and proceeds to step 1060. At step 1060, the CPU determines whether or not the current (actual) host vehicle inter-vehicular distance Dact is greater than the learned preferable inter-vehicular distance D0 under a stopped state.

When the current (actual) host vehicle inter-vehicular distance Dact is greater than the learned preferable inter-vehicular distance D0 under a stopped state, the CPU makes a "Yes" determination at step 1060, and proceeds to step 1070. The CPU lets the host vehicle HV creep drive. This makes the host vehicle HV move forward at an extremely low speed. Subsequently, the CPU proceeds to step 1080 and determines whether or not the host vehicle inter-vehicular distance Dact is equal to or shorter than the learned preferable inter-vehicular distance D0 under a stopped state.

When the host vehicle inter-vehicular distance Dact is longer than the learned preferable inter-vehicular distance D0 under a stopped state, the CPU returns to step 1070 from step 1080 so as to let the host vehicle HV creep drive (namely, make the host vehicle move forward slowly). Consequently, the host vehicle inter-vehicular distance Dact comes close to the learned preferable inter-vehicular distance D0 under a stopped state. When the host vehicle inter-vehicular distance Dact becomes equal to the learned preferable inter-vehicular distance D0 under a stopped state, the CPU makes a "Yes" determination at step 1080, and proceeds to 1085.

At step 1085, the CPU stores the host vehicle inter-vehicular distance Dact as an actual inter-vehicular distance Dstp under a stopped state. Subsequently, the CPU proceeds to step 1090 and sets the value of the ACC permission flag XALW to "0". At this time, the CPU transmits an instruction signal to the brake ECU 50 to increase the brake force. That is, the CPU executes a brake holding control. Thereafter, the CPU proceeds to step 1095 to terminate the present routine tentatively.

Note that, when the value of the stopped state learning flag XD0 is not "1" (i.e., when the preferable inter-vehicular distance D0 under a stopped state has not been learned) at the time point at which the CPU proceeds to step 1050, the CPU makes a "No" determination at step 1050 and directly proceeds to step 1095. In addition, when the current host vehicle inter-vehicular distance Dact is equal to or shorter than the learned preferable inter-vehicular distance D0 under a stopped state at the time point at which the CPU proceeds to step 1060, the CPU makes a "No" determination at step 1060 and directly proceeds to step 1085. Furthermore, at the time point at which the CPU proceeds to step 1040, when the current time point is after the time point at which the predetermined standby time has elapsed from the stopped time point, the CPU makes a "No" determination at step 1040 and directly proceeds to step 1085.

Furthermore, when the CPU makes a "No" determination at any one of steps from step 1010 to step 1035, it directly proceeds to step 1095 from the from the step at which the CPU makes the "No" determination.

7. ACC start control (start control when the host vehicle speed is "0")

When an appropriate time point comes, the CPU starts processing from step 1100 in FIG. 11, and proceeds to step 1110. At step 1110, the CPU determines whether or not the value of the ACC execution flag XACC is "1". When the value of the ACC execution flag XACC is "1", the CPU makes a "Yes" determination at step 1110, and proceeds to step 1120. At step 1120, the CPU determines whether or not the value of the traffic congestion traveling flag XJ is "1".

When the value of the traffic congestion traveling flag XJ is "1", the CPU makes a "Yes" determination at step 1120, and proceeds to step 1130. At step 1130, the CPU determines whether or not the host vehicle speed Vh is "0". When the host vehicle speed Vh is "0", the CPU makes a "Yes" determination at step 1130, and proceeds to step 1140. At step 1140, The CPU determines whether or not the value of the ACC permission flag XALW is "0".

When the value of the ACC permission flag XALW is "0", the CPU makes a "Yes" determination at step 1140, and proceeds to step 1150. At step 1150, the CPU determines whether or not the host vehicle inter-vehicular distance Dact is greater than a value obtained by adding a distance threshold Dth to the actual inter-vehicular distance Dstp under a stopped state. When the preceding vehicle PV starts moving after the preceding vehicle PV and the host vehicle HV both fully stopped, the host vehicle inter-vehicular distance Dact becomes greater than the value obtained by adding the distance threshold Dth to the actual inter-vehicular distance Dstp under a stopped state.

In this case, the CPU makes a "Yes" determination at step 1150, and proceeds to step 1160. At step 1160, the CPU determines whether or not the driver has made a starting operation (i.e., an operation to start moving the host vehicle HV). Specifically, the CPU determines that the starting operation is made, when the ACC resume requirement is generated/issued in accordance with the operation to the ACC operation switch 31 by the driver, or when the acceleration pedal operation amount AP changes from "0" to a value greater than "0" by the operation to the acceleration pedal.

When the starting operation is made by the driver, the CPU makes a "Yes" determination at step 1160, and proceeds to step 1170. At step 1170, the CPU sets the value of the ACC permission flag XALW to "1". As a result, the CPU comes to makes a "Yes" determination at step 530 at step 530 shown in FIG. 5. Therefore, the host vehicle is made started moving by the processes of step 580 and step 590. Thereafter, the CPU proceeds to step 1195 to terminate the present routine tentatively.

It should be noted that, when the CPU makes a "No" determination at any one of steps from step 1110 to step 1160, it directly proceeds to step 1195 from the step at which the CPU makes the "No" determination.

As has been described, the present control apparatus DS obtains, as the another vehicle inter-vehicular distance under a stopped state,

(A) the inter-vehicular distance between the first another vehicle that is in a stopped state around the host vehicle and the second another vehicle that is in a stopped state immediately in front of the first another vehicle (D12 to D15, shown in FIG. 4); and/or

(B) the inter-vehicular distance between the first another vehicle that is in a stopped state around the host vehicle and the host vehicle that is in a stopped state immediately in front of the first another vehicle (D11 shown in FIG. 4).

Furthermore, the present control apparatus DS sets the preferable inter-vehicular distance D0 under a stopped state that is used as the target inter-vehicular distance Dtgt of when the host vehicle is in a stopped state in accordance with the "obtained another vehicle inter-vehicular distance(s) under a stopped state". Therefore, the target inter-vehicular distance Dtgt of when the host vehicle is under a stopped state can be controlled to be a preferable distance.

In addition, when the obtained another vehicle inter-vehicular distance under a stopped state is an inter-vehicular distance that another vehicle whose type is the predetermined type (i.e., the type different from the type of the host vehicle) keeps, that obtained another vehicle inter-vehicular distance under a stopped state is not regarded/treated as an effective inter-vehicular distance under a stopped state so that the obtained another vehicle inter-vehicular distance under a stopped state does not affect the preferable inter-vehicular distance D0 under a stopped state. Thus, the target inter-vehicular distance Dtgt of when the host vehicle is under a stopped state can be controlled to be a more preferable distance.

It should be noted that the present disclosure is not limited to the above-described embodiments, and may adopt various modified examples within the scope of the present disclosure. For example, the present control apparatus can be applied to a host vehicle that is an autonomous driving vehicle in a state where its driving mode has been switched from an autonomous driving to a manual driving by the driver.

In addition, as long as information of an object around the host vehicle (i.e., within 360 degrees range around the host vehicle) can be obtained, the number of the camera can be any, and/or a LiDAR can be adopted in place of or in addition to the radar devices. Furthermore, the present control apparatus DS may be configured to determine the preferable inter-vehicular distance D0 under a stopped state based solely on the inter-vehicular distance D11 that the rearward another vehicle keeps between the host vehicle that is in a stopped state and the rearward another vehicle that is in a stopped state immediately behind the host vehicle. In this case, the present control apparatus DS may be configured to set the preferable inter-vehicular distance D0 under a stopped state to the inter-vehicular distance D11, or to set the preferable inter-vehicular distance D0 under a stopped state to a value obtained by adding a predetermined margin distance to the inter-vehicular distance D11.

**Claims**

1. An inter-vehicular distance control apparatus comprising:

   an information obtaining device (21, 22, 23L, 23R, 24L, 24R, 25, 26, 27L, 27R, 28L, 28R) configured to obtain information on an object present around a host vehicle (HV); and
   a controller (10, 40, 50) configured to be capable of executing an inter-vehicular distance control to obtain, based on said information, a host vehicle inter-vehicular distance (Dact) which is an inter-vehicular distance between a preceding vehicle (PV) present immediately in front of said host vehicle (HV) and said host vehicle (570), and to control said host vehicle in such a manner that said obtained host vehicle inter-vehicular distance is maintained at a predetermined target inter-vehicular distance (Dtgt, 580, 590),
   wherein,
   said controller is configured to:

      obtain, based on said information, an inter-vehicular distance (D12, D13, D14, D15) between a first another vehicle that is in a stopped state around said host vehicle and a second another vehicle that is in a stopped state immediately in front of said first another vehicle, or between said first another vehicle and said host vehicle that is in a stopped state immediately in front of said first another vehicle (D11), as an another vehicle inter-vehicular distance under a stopped state (950); and
      use a preferable inter-vehicular distance under a stopped state that is set in accordance with said obtained another vehicle inter-vehicular distance under a stopped state, as said target inter-vehicular distance (Dtgt) of when said host vehicle is in a stopped state (970, 720).

2. The inter-vehicular distance control apparatus according to claim 1, wherein
   said controller is configured to:

      determine, based on said information, whether or not a vehicle type of said first another vehicle is a predetermined vehicle type (960); and
      when it is determined that said vehicle type of said first another vehicle is said predetermined vehicle type,
      let an inter-vehicular distance between said first another vehicle whose type is determined to be said predetermined vehicle type and said second another vehicle that is in a stopped state immediately in front of said first another vehicle, and an inter-vehicular distance between said first another vehicle whose type is determined to be said predetermined vehicle type and said host vehicle that is in a stopped state immediately in front of said first another vehicle not affect said preferable inter-vehicular distance under a stopped state (970).

3. The inter-vehicular distance control apparatus according to claim 1 or 2, wherein
   said controller is configured to:

return said preferable inter-vehicular distance under a stopped state (D0) to an initial value (D0int) when a host vehicle speed which is a vehicle speed of said host vehicle becomes higher than a predetermined traffic congestion traveling determination vehicle speed (710: No, 730);

thereafter, when said preferable inter-vehicular distance under a stopped state (D0) is set again after said said host vehicle is decelerated by said inter-vehicular distance control to fully stop and before a time point at which a predetermined standby period elapses from a time point at which said host vehicle fully stops (1040: Yes, 1050, 970, 980), let said host vehicle move forward in such a manner that said host vehicle inter-vehicular distance (Dact) becomes equal to said preferable inter-vehicular distance under a stopped state that is set again (1070, 1080).

4. The inter-vehicular distance control apparatus according to claim 3, wherein
said controller is configured to:

obtain, based on said information, an inter-vehicular distance (D12, D13, D14, D15) between a third another vehicle traveling around said host vehicle and a fourth another vehicle traveling immediately in front of said third another vehicle or an inter-vehicular distance (D11) between a third another vehicle traveling around said host vehicle and said host vehicle traveling immediately in front of said third another vehicle, as an another vehicle inter-vehicular distance under a traffic congestion traveling state, when said host vehicle speed becomes equal to or lower said traffic congestion traveling determination vehicle speed from a speed higher than said traffic congestion traveling determination vehicle speed while said inter-vehicular distance control is being executed (850);

store said host vehicle speed of when said another vehicle inter-vehicular distances under a traffic congestion traveling state is obtained, as a learned vehicle speed (Vm; 880, M1);

obtain through calculation said preferable inter-vehicular distance (Dm) under a traffic congestion traveling state, based on said another vehicle inter-vehicular distances under a traffic congestion traveling state (870);

store said preferable inter-vehicular distance (Dm) under a traffic congestion traveling state while associating said preferable inter-vehicular distance under a traffic congestion traveling state with said learned vehicle speed (Vm; 720, M1); and

determine said target inter-vehicular distance (Dtgt), based on said preferable inter-vehicular distance under a stopped state (D0), said preferable inter-vehicular distance under a traffic congestion traveling state (Dm), said learned vehicle speed (Vm), and said host vehicle speed (Vh), when said host vehicle speed is lower than said learned vehicle speed (720).

5. An inter-vehicular distance control method for controlling a host vehicle (HV) in such a manner that a host vehicle inter-vehicular distance (Dact) which is an inter-vehicular distance between a preceding vehicle (PV) present immediately in front of said host vehicle (HV) and said host vehicle is maintained at a predetermined target inter-vehicular distance (Dtgt), comprising:

a step of obtaining an inter-vehicular distance (D12, D13, D14, D15) between a first another vehicle that is in a stopped state around said host vehicle and a second another vehicle that is in a stopped state immediately in front of said first another vehicle, or between said first another vehicle and said host vehicle that is in a stopped state immediately in front of said first another vehicle (D11), as an another vehicle inter-vehicular distance under a stopped state (950);

a step of calculating a preferable inter-vehicular distance under a stopped state based on said obtained another vehicle inter-vehicular distance under a stopped state; and

a step of using said referable inter-vehicular distance under a stopped state as said target inter-vehicular distance (Dtgt) of when said host vehicle is in a stopped state (970, 720).

6. A non-transitory storage medium storing a program, said program causing a computer mounted on a host vehicle (HV) to implement:

a step of controlling a host vehicle in such a manner that a host vehicle inter-vehicular distance (Dact) which is an inter-vehicular distance between a preceding vehicle (PV) present immediately in front of said host vehicle (HV) and said host vehicle is maintained at a predetermined target inter-vehicular distance (Dtgt);

a step of obtaining an inter-vehicular distance (D12, D13, D14, D15) between a first another vehicle that is in a stopped state around said host vehicle and a second another vehicle that is in a stopped state immediately in front of said first another vehicle, or between said first another vehicle and said host vehicle that is in a stopped state immediately in front of said first another vehicle (D11), as an another vehicle inter-vehicular distance under a stopped state (950);
a step of calculating a preferable inter-vehicular distance under a stopped state based on said obtained another vehicle inter-vehicular distance under a stopped state; and
a step of using said referable inter-vehicular distance under a stopped state as said target inter-vehicular distance of when said host vehicle is in a stopped state (970, 720).

21 — Forward long distance camera device

22 — Frontward camera device

23L — Front leftward camera device

23R — Front rightward camera

24L — Rear leftward camera device

24R — Rear rightward camera device

25 — Rearward camera device

26 — Forward radar device

27L — Front leftward radar device

27R — Front rightward radar device

28L — Rear leftward radar device

28R — Rear rightward radar device

31 — ACC operation switch

32 — Vehicle speed sensor

33 — Acceleration pedal operation amount sensor

CAN

DS

10 — Driving assistance ECU (DSECU)

CPU

ROM

RAM

40 — Power train ECU

41 — Power train sensor

42 — Power train actuator

50 — Brake ECU

51 — Brake sensor

52 — Brake actuator

FIG.1

FIG.2

FIG.3

FIG.4

```
          ACC traveling control                    ~500

                      |
                      | ┌510
      < ACC execution flag XACC = 1? >──No──────────────────┐
                      |                                      |
                      | Yes                                  |
                      | ┌520                                 |
      < Whether there is a preceding                         |
        vehicle to be regarded as an                         |
        object to be followed (target  >──No────────────────┤
        vehicle to be followed) in a host                    |
        vehicle lane?                  >                      |
                      |                                      |
                      | Yes                                  |
                      | ┌530                                 |
      < ACC permission flag XALW = 1? >──No──────────────────┤
                      |                                      |
                      | Yes                                  |
                      | ┌540                                 |
      < traffic congestion traveling >──No──┐                |
        flag XJ = 0?                        |                |
                      |                      |                |
              Yes     |┌550          ┌560    |                |
      ┌───────────────────┐   ┌───────────────────┐         |
      | Obtain a target    |   | Obtain a target    |        |
      | inter-vehicular    |   | inter-vehicular    |        |
      | distance Dtgt      |   | distance Dtgt      |        |
      | for a normal       |   | for a traffic      |        |
      | traveling state    |   | congestion         |        |
      └───────────────────┘   | traveling state    |        |
                  |           └───────────────────┘         |
                  |←──────────────────┘                      |
                  | ┌570                                      |
      ┌────────────────────────────┐                         |
      | Obtain a host vehicle inter-|                        |
      | vehicular distance Dact and a|                       |
      | relative speed Vrelative    |                        |
      └────────────────────────────┘                         |
                  | ┌580                                      |
      ┌────────────────────────────┐                         |
      | Oobtain a target acceleration Gtgt|                  |
      |                             |                         |
      | Gtgt ← k1·ΔD + k2·Vrelative  |                        |
      | (ΔD=Dact - Dtgt)            |                         |
      └────────────────────────────┘                         |
                  | ┌590                                      |
      ┌────────────────────────────┐                         |
      | Control host vehicle        |                         |
      | in such a manner that an actual|                     |
      | acceleration becomes equal to a|                    |
      | target acceleration Gtgt    |                         |
      └────────────────────────────┘                         |
                  |←────────────────────────────────────────┘
          ┌──────────────┐
          |   Return     |~595
          └──────────────┘
```

FIG.5

FIG.6

Obtainment of a target inter-vehicular distance for a traffic congestion traveling state —700

host vehicle speed Vh≦traffic congestion traveling determination vehicle speed VJth? —710

No →

traffic congestion traveling flag XJ←0
stopped state learning flag XD0←0
traffic congestion traveling learning flag XDm←0
D0←D0int
Clear Vm
Clear Dm —730

Yes

Obtain a target inter-vehicular distance Dtgt —720

—M1

| Vh | 0 | Vm | VJth |
|------|-----|-----|------|
| Dtgt | D0 | Dm | DJth |

When traffic congestion traveling learning flag XDm is "1"

If $0 \leqq Vh \leqq Vm$
$Dtgt = D0 + (Dm - D0) \cdot \dfrac{Vh}{Vm}$

If $Vm < Vh \leqq VJth$,
$Dtgt = Dm + (DJth - Dm) \cdot \dfrac{Vh - Vm}{VJth - Vm}$

When traffic congestion traveling learning flag XDm is "0"

$Dtgt = D0 + (DJth - D0) \cdot \dfrac{Vh}{VJth}$

Return —795

FIG.7

Learning of a preferable inter-
vehicular distance Dm under a traffic — 800
congestion traveling state

ACC execution flag XACC = 1? — 810 — No

Yes

traffic congestion traveling flag XJ = 1? — 820 — No

Yes

traffic congestion traveling learning flag — 830 — No
XDm = 0?

Yes

VLth < host vehicle speed Vh < VJth ? — 840 — No

Yes

Obtain another vehicle inter-vehicular — 850
distances under a traffic congestion
traveling state

Are two or more of the another vehicle — 860 — No
inter-vehicular distances under a traffic
congestion traveling state obtained?

Yes

preferable inter-vehicular distance Dm — 870
under a traffic congestion traveling
state←an average of effective another
vehicle inter-vehicular distances under a
traffic congestion traveling state

learned vehicle speed Vm — 880
←host vehicle speed Vh

traffic congestion traveling learning flag — 890
XDm←1

Return — 895

FIG.8

```
          ┌─────────────────────────────┐
          │  Learning of a preferable inter- │
          │  vehicular distance D0 under a   │～900
          │       stopped state          │
          └─────────────────────────────┘
                        │
                        │                    ～910
          ⟨  ACC execution flag XACC = 1?  ⟩─── No ──┐
                        │                             │
                       Yes     ～920                  │
          ⟨  traffic congestion traveling  ⟩─── No ──┤
          ⟨       flag XJ = 1?             ⟩          │
                        │                             │
                       Yes     ～930                  │
          ⟨  stopped state learning flag   ⟩─── No ──┤
          ⟨         XD0 = 0?               ⟩          │
                        │                             │
                       Yes     ～940                  │
          ⟨  0≦host vehicle speed          ⟩─── No ──┤
          ⟨       Vh≦VLth ?                ⟩          │
                        │                             │
                       Yes     ～950                  │
          ┌─────────────────────────────┐            │
          │  Obtain another vehicle inter-  │           │
          │  vehicular distances under a    │           │
          │       stopped state          │            │
          └─────────────────────────────┘            │
                        │          ～960               │
          ⟨   Are two or more of the        ⟩          │
          ⟨   another vehicle inter-        ⟩─── No ───┤
          ⟨   vehicular distances under a   ⟩          │
          ⟨   stopped state obtained?       ⟩          │
                        │                             │
                       Yes     ～970                  │
          ┌─────────────────────────────┐            │
          │ D0←an average of effective another │       │
          │ vehicle inter-vehicular distances under │  │
          │        a stopped state        │           │
          └─────────────────────────────┘            │
                        │          ～980               │
          ┌─────────────────────────────┐            │
          │ stopped state learning flag XD0←1 │        │
          └─────────────────────────────┘            │
                        │◄────────────────────────────┘
          ┌─────────────────────────────┐
          │           Return            │～995
          └─────────────────────────────┘
```

**FIG.9**

Adjustment of an inter-vehicular distance under a stopped state — 1000

ACC execution flag XACC = 1? — 1010 — No

Yes

traffic congestion traveling flag XJ = 1? — 1020 — No

Yes

host vehicle speed Vh = 0? — 1030 — No

Yes

ACC permission flag XALW = 1? — 1035 — No

Yes

whether the current time point is before a time point at which a predetermined standby time has elapsed from a time point at which the host vehicle speed Vh changed from a value greater than "0" to "0"? — 1040 — No

Yes

stopped state learning flag XD0 = 1? — 1050 — No

Yes

actual host vehicle inter-vehicular distance Dact > learned preferable inter-vehicular distance D0 under a stopped state? — 1060 — No

Yes

Creep drive — 1070

Dact ≦ D0 ? — 1080 — No

Yes

actual inter-vehicular distance Dstp ← Dact — 1085

ACC permission flag XALW ← 0 — 1090

Return — 1095

FIG.10

ACC start control ~1100

~1110
ACC execution flag XACC = 1? — No

Yes ~1120
traffic congestion traveling flag XJ = 1? — No

Yes ~1130
host vehicle speed Vh = 0? — No

Yes ~1140
ACC permission flag XALW = 0? — No

Yes ~1150
actual host vehicle inter-vehicular distance Dact > actual inter-vehicular distance Dstp + Dth? — No

Yes ~1160
Is starting operation made? — No

Yes ~1170
ACC permission flag XALW←1

Return ~1195

FIG.11

Europäisches
Patentamt
European
Patent Office
Office européen
des brevets

# EUROPEAN SEARCH REPORT

**Application Number**

EP 25 18 9697

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2008 189055 A (TOYOTA MOTOR CORP) 21 August 2008 (2008-08-21) * paragraphs [0002] - [0011], [0026], [0027], [0037] - [0040]; figure 4 * | 1-6 | INV. B60W30/16 B60W30/17 B60W30/18 |
| A | US 9 272 711 B1 (SIVARAMAN SAYANAN [US]) 1 March 2016 (2016-03-01) * the whole document * | 1-6 | |
| A | US 2024/199086 A1 (AOKI MASAKAZU [JP] ET AL) 20 June 2024 (2024-06-20) * the whole document * | 1-6 | |
| A | US 2018/334167 A1 (DROWN JEFFERY E [US] ET AL) 22 November 2018 (2018-11-22) * the whole document * | 1-6 | |

**TECHNICAL FIELDS SEARCHED (IPC)**

B60W

The present search report has been drawn up for all claims

| Place of search | Date of completion of the search | Examiner |
|---|---|---|
| Munich | 20 November 2025 | Bak, Maciej |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 9697

This annex lists the patent family members relating to the patent documents cited in the above-mentioned European search report.
The members are as contained in the European Patent Office EDP file on
The European Patent Office is in no way liable for these particulars which are merely given for the purpose of information.

20-11-2025

| Patent document cited in search report | | Publication date | Patent family member(s) | | Publication date |
|---|---|---|---|---|---|
| JP 2008189055 A | | 21-08-2008 | JP | 4225352 B2 | 18-02-2009 |
| | | | JP | 2008189055 A | 21-08-2008 |
| | | | WO | 2008093890 A1 | 07-08-2008 |
| US 9272711 B1 | | 01-03-2016 | NONE | | |
| US 2024199086 A1 | | 20-06-2024 | CN | 118182518 A | 14-06-2024 |
| | | | JP | 7722346 B2 | 13-08-2025 |
| | | | JP | 2024085236 A | 26-06-2024 |
| | | | US | 2024199086 A1 | 20-06-2024 |
| US 2018334167 A1 | | 22-11-2018 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008189055 A